# EUROPEAN PATENT SPECIFICATION

(11) **EP 0 749 529 B1**
(45) Date of publication and mention of the grant of the patent: **22.12.1999**
(21) Application number: 95912766.3
(22) Date of filing: 06.03.1995
(51) Int. Cl.: F03B 13/26

(54) **TIDAL GENERATOR**
UMWANDLER FÜR GEZEITENENERGIE
CENTRALE MAREMOTRICE

(30) Priority: 11.03.1994 US 209870; 24.02.1995 US 390304
(43) Date of publication of application: 27.12.1996
(73) Proprietor: TIDAL ELECTRIC, INC., Branford, CT 06405 (US)
(72) Inventor: ULLMAN, Peter, W., Branford, CT 06405 (US); LATHROP, Daniel, P., Decatur, GA 30030 (US)
(74) Representative: VOSSIUS & PARTNER
(86) International application number: US9502823
(87) International publication number: WO9524555

(56) References cited:
- WO-A-79/00028
- FR-A- 2 392 174
- FR-A- 2 475 147
- GB-A- 2 039 330
- GB-A- 2 267 128
- US-A- 4 185 464
- US-A- 4 249 085
- US-A- 4 425 510

## Description

### I. Background Of The Invention

During the past three decades, the cost of fossil fuels has increased dramatically. Moreover, in recent years, scientists have begun to recognize the environmentally detrimental effects of hydrocarbon emissions associated with the use of fossil fuels. These factors have lead to increased interest in renewable and environmentally safe forms of energy production including photoelectricity, solar thermal energy, geothermal energy, wind power and hydroelectricity.

Hydroelectric power has been the most widely exploited form of "alternate" energy production. Tides have been harnessed to generate power for hundreds of years. For example, tidal mills on the Danube river date back to the twelfth century. More recently, energy technologists have employed various tidal power station designs to generate and store electrical energy. Many of these designs have been problematic because of adverse effects on the environment such as flooding and changing the tidal regime, which leads to disruption of fragile seashore and estuary ecosystems. [See, e.g., F. O'Kelly, "Harnessing the Ocean's Energy: Are We Ready for a Gift from the Sea?, Hydro-Review, Vol. X, No. 4, July 1991]. Many designs are not amenable to large-scale deployment and, therefore, cannot produce commercially meaningful quantities of electrical energy in a cost effective manner. Moreover, many proposed tidal power station designs rely on a single mechanism or system for generating energy, which may result in energy production that is out of phase with consumer demands as well as dramatic reduction of energy output under certain weather conditions or if repairs to the station are required. [See, e.g., Kertzman, U.S. Patent No. 4,249,085; Jury, U.S. Patent No. 4,425,510; Rainey, U.S. Patent No. 4,185,464; and U.K. Patent Application GB 2039330A.] Technologists have recognized that a tidal power generation installation could be useful for producing industrial gases such as hydrogen (see, e.g., French Patent Application A-2, 475, 147). However, such gas production has not been realized with a commercially acceptable power generating device.

It would therefore be desirable to provide an apparatus for generating electrical energy from the tidal movements of a body of water that is not limited to a narrow range of feasible installation sites and that is well-suited for deployment in many different locations because it will not effect fragile seashore and estuary ecosystems.

It would also be desirable to provide an apparatus for generating electrical energy from the tidal movements of a body of water that does not flood surrounding lands or markedly change the tidal regime.

It would also be desirable to provide an apparatus for generating electrical energy from the tidal movements of a body of water that is amenable to large-scale deployment and that produces significant quantities of electrical energy.

It would also be desirable to provide an apparatus for generating electrical energy from the tidal movements of a body of water that can produce energy over the entire 12 hour and 25 minute tidal cycle.

It would also be desirable to provide an apparatus for generating electrical energy from the tidal movements of a body of water that employs multiple interactive mechanisms that optimize the quantity of electrical energy production.

It would also be desireable to provide an apparatus for generating electrical energy from the tidal movements of a body of water that may be installed in segments.

### II. Summary Of The Invention

It is an object of this invention to provide an apparatus for generating electrical energy from the tidal movements of a body of water that is not limited to a narrow range of feasible installation sites and that is well-suited for deployment in many different locations because it will not effect fragile seashore and estuary ecosystems.

It is also an object of this invention to provide an apparatus for generating electrical energy from the tidal movements of a body of water that does not flood surrounding lands or markedly change the tidal regime.

It is also an object of this invention to provide an apparatus for generating electrical energy from the tidal movements of a body of water that is amenable to large-scale deployment and that produces significant quantities of electrical energy.

It is also an object of this invention to provide an apparatus for generating electrical energy from the tidal movements of a body of water that can produce energy over the entire 12 hour and 25 minute tidal cycle.

It is also an object of this invention to provide an apparatus for generating electrical energy from the tidal movements of a body of water that employs multiple interactive mechanisms that optimize the quantity of electrical energy production.

It is also an object of this invention to provide an apparatus for generating electrical energy from the tidal movements of a body of water that may be installed in segments.

In accordance with the foregoing objects of the present invention, we provide an apparatus for generating electrical energy from the tidal movements of a body of water. The present invention comprises a tidal electric power generator that employs multiple interactive energy producing systems that cooperate to enhance the overall output and reliability of the generator. Those energy producing systems include: (1) a moveable tank system associated with hydraulic cylinders in which the upward and downward movements of the tank relative to the tide are used to generate electrical power; (2) an enclosure system in which the controlled inflow and outflow of water between the enclosure and the surrounding body of water is used to generate electrical power; (3) a bellows system in which the effects of the tidal movements are used to force water from a bellows tank through a generator thereby producing electrical power; and (4) a buoyant mass-actuated piston system in which the movement of floating objects (such as docked ships) relative to the tide is used to generate electrical power. The use of these multiple interactive energy producing systems maximizes the electrical power output of the tidal generator relative to the area that the generator occupies.

### III. Brief Description Of The Drawings

The above-cited and other objects and advantages of the present invention will be apparent upon consideration of the following detailed description, taken in conjunction with the accompanying drawings, in which reference characters consistently refer to the same elements, and in which:
Figure 1 is a schematic view of one embodiment of the present invention in which an enclosure system, a moveable tank system and a bellows system are employed to generate electrical energy;
Figure 1a is a more detailed schematic view of the inlet and outlet valves used with the enclosure system;
Figure 2 is a schematic view of another embodiment of the present invention in which an enclosure system and a moveable tank system are employed to generate electrical energy;
Figure 3 is a schematic view of another embodiment of the present invention in which an enclosure system and a bellows system are employed to generate electrical energy; and
Figure 4 is a schematic view of a buoyant mass-actuated piston system that may be used in conjunction with the apparatus shown in Figures 1-4 to generate electrical energy.

### IV. Detailed Description Of the Invention

The tidal power generator of the present invention includes three primary systems for producing electrical energy: (1) the moveable tank system 100; (2) the enclosure system 200; and (3) the bellows system 300. The moveable tank system 100 includes a hollow tank 10 that is suspended in a rigid support structure 11. The tank 10 is attached to the rigid support structure 11 using one or more telescoping hydraulic cylinders 12. The top and the bottom of the tank 10 are equipped with a series of valves 13 that allow for controlled flow of water and air into and out of the tank 10.

In operation, the telescoping hydraulic cylinders 12 permit controlled vertical movement of the tank 10 within the rigid support structure 11, and may lock the tank 10 in place at a predetermined location relative to the tide level. Preferably, the height of the tank 10 is approximately equal to the maximum tidal range (i.e, the maximum differential between the extreme high tide and the extreme low tide levels) and the rigid support structure 11 is at least three times the height of the maximum tidal range. Thus, the tank 10 may travel so, at one time, its bottom rests just below the high tide mark, and at another time, the top of the tank 10 is submerged just below the low tide mark.

Electrical energy is generated by the movement of the tank 10 during both the rising and the lowering of the tide as follows. The tank 10 is initially empty and sits above the high tide level. As the high tide approaches, valves 13 located in the top and bottom of the tank 10, are opened and the tank 10 is allowed to settle into the water. As water flows into the tank 10, the tank 10 submerges until the top of the tank 10 is substantially flush with the high tide level. The valves 13 are then closed and the telescoping hydraulic cylinders 12 lock the tank 10 at this position. One skilled in the art will recognize that the hydraulic cylinders 12 may be locked into position using any type of locking mechanism 18 including manually operated, computer-controlled or automatic resistance mechanisms that arrest movement of the tank at a desired point relative to the tide level. As the high tide recedes to low tide, the tank 10 remains filled with water and is suspended above the low tide level. The weight of the water in the tank 10 exerts a large downward force and causes the hydraulic fluid within the cylinders 12 to be subject to high-pressure conditions.

At approximately the time of low tide, the hydraulic cylinders 12 are unlocked and the tank 10 is allowed to settle into the water to a level at which the top of the tank 10 is substantially flush with the low tide level. As the tank is lowered into the water, the hydraulic cylinders 12 deliver high-pressure hydraulic fluid to be stored in one or more hydraulic accumulators 14. That fluid is subsequently delivered gradually through a turbine generator 15 whereby electrical energy is produced. The operation of the accumulator 14 and the generator 15 are detailed below.

The valves 13 are next opened and a small amount of stored hydraulic energy is expended to lift the tank 10 out of the water as the water gradually drains out of the tank 10. When the tank 10 is substantially drained and positioned with its bottom substantially flush with the low tide level of the water, the valves 13 are closed and the hydraulic cylinders 12 are again locked to maintain the tank 10 in this position.

As the tide rises, the substantially empty tank 10 exerts a large upward force due to buoyancy. At approximately the high tide, the tank 10 is allowed to rise out of the water with the hydraulic cylinders 12 controlling its rate of ascent. During this ascent the hydraulic cylinders 12 gather high-pressure hydraulic fluid for storage and later conversion to electrical energy. The tank 10 is then locked into position with its bottom just below the high tide level, thus completing one cycle of tidal rising and lowering.

One skilled in the art will recognize that several types of hydraulic accumulators may be used with the present invention. For example, the hydraulic accumulator 14 may be the type that employs compressed air or the type that uses a cylinder with a large weight for maintaining pressure during storage. Similarly, several types of turbines may be employed with the present invention. The turbines may be, for example, gear pump-type turbines or design impulse-type turbines in which multiple buckets catch the hydraulic fluid as it is released from nozzles associated with the accumulator. Electrical power generated by the turbines is transported to land utilities via cable 20 along the floor of the body of water.

The moveable tank system 100 allows for gradual delivery of stored hydraulic pressure fluid from accumulators 14 through turbine generators 15. Thus, electrical power may be produced continuously or on demand over the 12 hour and 25 minute tidal cycle, depending on consumer requirements.

It will be readily apparent to the skilled worker that one large tank or several smaller tanks may be employed in the moveable tank system 100. In some applications, the use of several smaller tanks may be preferable because water can be released from the tanks sequentially or in groups, thereby enhancing control over the amount of water released at any given time.

The enclosure system 200 includes a barrier that is formed by substantially vertical walls 16. The vertical walls 16 extend above the extreme high tide level and below the extreme low tide level. The enclosure system 200 also includes a solid, substantially horizontal bottom 17 that is joined to the vertical walls 16 below the extreme low tide level. The vertical walls 16 and horizontal bottom 17 are formed from a durable material such as structural concrete and are firmly rooted in the floor of the ocean (or other body of water in which the present invention is deployed).

The vertical walls 16 and horizontal bottom 17 form a large basin within which water is allowed to flow to and from the surrounding ocean through a series of electrical energy-generating turbines 19. The turbines 19 are associated with openings in the vertical walls 16. Those openings direct water moving into the basin from the surrounding body of water and water moving out of the basin to the surrounding body of water through the turbines 19. Such "double action" water flow is accomplished by: (1) placing the turbines 19 longitudinally inside the wall 16 and (2) connecting both the inlet and the outlet of the turbines 19 to two gate valves 21 each. One gate valve opens to the inside of the basin and the other opens to the surrounding body of water.

In this way, power may be generated during low tide by releasing water through the turbines 19 as the inside inlet valve 21a and the outside outlet valve 21b are opened and water moves from the inside of the basin to the surrounding body of water. At high tide, power may be generated by releasing water through the turbines 19 as the outside inlet valve 21c and the inside outlet valve 21d are opened and water moves into the basin from the outside body of water. Moreover, because the release of water from the basin corresponds to the maximum difference between the high tide and low tide levels (i.e., the "head") the discharge of water has a negligible effect on the tidal regime.

The turbines 19 deployed longitudinally within the walls 16 of the enclosure system 200 may be any of several types of turbines well known to those skilled in the art, including bulb-type axial flow turbines, thru-flow axial flow turbines, and turbines connected to a hydraulic pump. Depending on the type of turbine used, electrical power may be produced directly and transported by cable to land utilities, or high pressure hydraulic fluid may be stored in accumulators prior to conversion.

The bellows system 300 includes a substantially hollow stationary tank 22 that is, preferably, positioned below the horizontal bottom 17 of the enclosure system 200. Also, preferably, the stationary tank 22 is affixed to the floor of the body of water. A bellows tank 23 consisting of a flat lid 24 and compressible and expandable side walls 25 that form a bellows is connected to the top of the stationary tank 22. The bellows tank 23 is equipped with a side support structure 26 to prevent collapse and damage from currents and other phenomena that may cause horizontal movement of the bellows. In the embodiments of the present invention that employ the bellows system 300 in conjunction with the enclosure system 200, the horizontal bottom 17 of the enclosure is adapted with vents that allow water to flow through the bottom 17 of the enclosure. In this way, the bellows system 300 is subject to the higher pressure of high tide and reduced pressure of low tide.

In alternate embodiments of the present invention, the bottom 17 of the enclosure may be contiguous with the floor of the body of water, or may be the floor itself. In such embodiments, the bellows system 300 is affixed to (and above) the bottom of the enclosure, where it is subject to the higher pressure of high tide and the reduced pressure of low tide.

The volume of the bellows tank 23 and the volume of the stationary tank 22 are approximately equal. No part of either the bellows tank 23 or stationary tank 22 extends above the low tide level. An air inlet 27 extends from the stationary tank 22 to a point above the surface of the water. The air inlet 27 provides the stationary tank with an air supply and maintains that air substantially at atmospheric pressure.

In operation, the bellows tank 23 is initially filled with water. At high tide the bellows is substantially deflated and emptied of water. Upon deflation, a valve positioned in an opening that connects the stationary tank 22 to the bellows tank 23 is opened and the water initially kept within the bellows tank 23 moves into the stationary tank 22. As the water flows from the bellows tank 23 into the stationary tank 22 it passes through a turbine generator 28 thereby producing electrical energy.

At low tide, the water in the stationary tank 22 is pumped back into the bellows tank 23. A portion of the energy produced during the deflation of the bellows is used for this reinflation. There is, however, a net energy gain because reinflation is accomplished at low tide. Typically, electrical power is produced directly by the turbine generator 28 as the bellows tank is deflated, and that power is transported by cable 20 to land utilities.

It will be readily apparent to the skilled worker that one large bellows tank 23 and stationary tank 22 arrangement or several smaller arrangements may be employed in the bellows system 300. In some applications, the use of several smaller bellows/stationary tanks may be preferable because smaller bellows are easier to maintain and are less prone to damage. In order to maximize its efficiency, the bellows tank system is preferably deployed at a depth of about 120 meters or less.

The skilled worker will readily appreciate that the bellows tank is not necessarily configured as a collapsible "accordion" structure. A structure of any configuration that allows water to be delivered to the stationary tank is acceptable for use with the present invention. In an alternate embodiment, the submerged stationary tank may be deployed without a bellows tank-type structure. The stationary tank can be operated to allow selectively water to travel into and out of the tank, to and from the surrounding body of water, so that the stationary tank is substantially filled with water at high tide and substantially filled with air at low tide. The stationary tank may be adapted with a filter means that will prevent debris from the body of water from entering the submerged stationary tank and disrupting the operation of the turbines.

The present invention employs interactive electrical energy producing systems -- the moveable tank system 100, the enclosure system 200 and the bellows system 300 -- that cooperate to enhance the overall output of the present invention. The use of multiple systems increases the reliability of the tidal generator. For example, even if storm conditions or high winds interfered with the operation of the moveable tank system 100, the enclosure system 200 and the bellows system 300 would continue to produce electrical power. Moreover, the use of multiple systems insures energy production when repairs to one of the systems are required and allows for installation of the power station in segments and allows for use of the individual energy producing systems when demand levels are reduced or environmental conditions would so require.

The present invention is amenable to large scale deployment and production of significant quantities of electrical energy is circumnavigable and does not significently disrupt marine habitants. Preferably, the basin formed by the vertical walls 16 and the horizontal bottom 17 of the enclosure system has a surface area of at least 4,000 m². The large basin size accommodates the upward and downward movement of the one or more large moveable tanks into and out of the water within the basin. While it is preferable to deploy the moveable tank(s) so that they travel vertically within the area defined by the vertical walls of the enclosure, it may also be advantageous under some circumstances to deploy the moveable tanks around the outer perimeter of the enclosure.

Preferably, the bottom of the enclosure is large enough to accommodate the bellows/stationary tank(s) completely beneath it. This would minimize the environmental impact of the tidal generator, reduce wear and tear on the bellows and facilitate repairs to the bellows. The same benefits will accrue in the embodiments of this invention where the bottom 17 of the enclosure is contiguous with the floor of the body of water (or is the floor itself), as the vertical walls 16 of the enclosure can be constructed to completely surround the bellows system 300.

Preferably, the tidal electric power generator of the present invention is deployed in an ocean environment in which there is a large difference between the high tide and the low tide levels. Large tide differential will enhance the output of the tidal generator. The large-scale and sturdy design of the present invention makes it suitable for deployment a significant distance off shore where it will not interfere with delicate shoreline ecosystems. The tidal generator of the present system may also be deployed in certain river, bay, sea, estuary or lake environments.

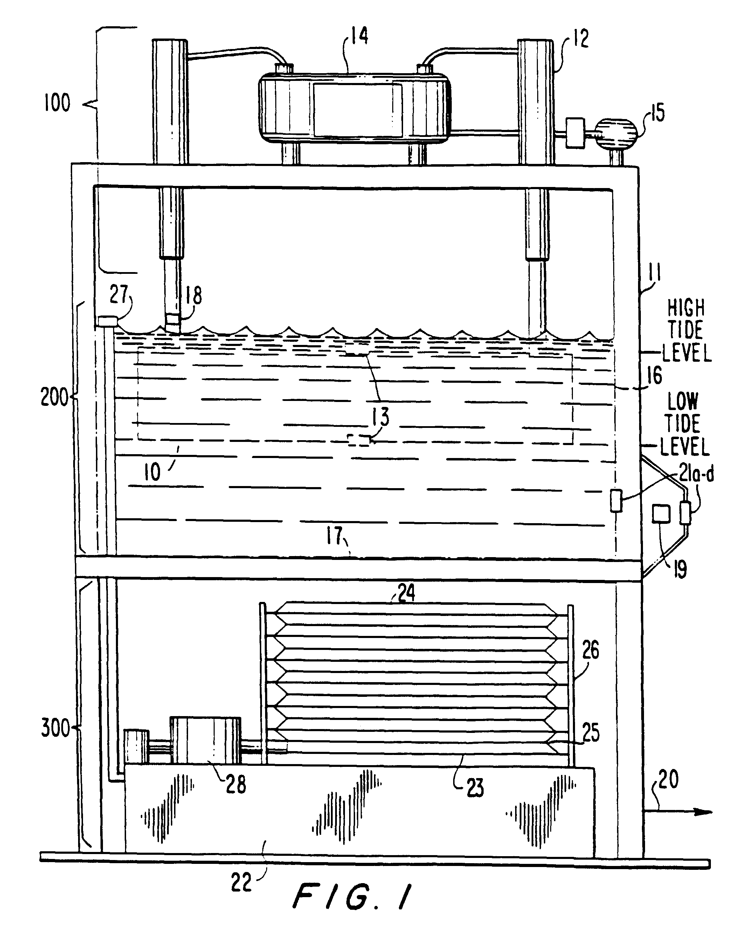

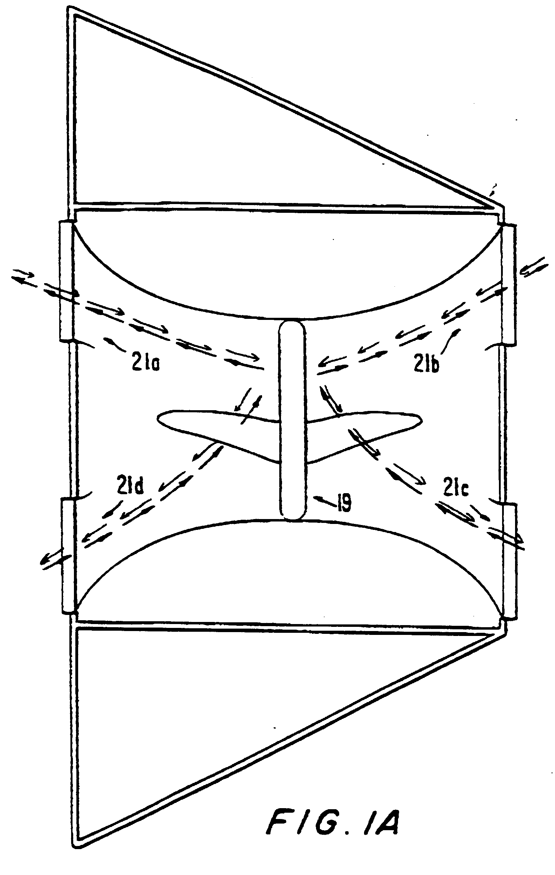

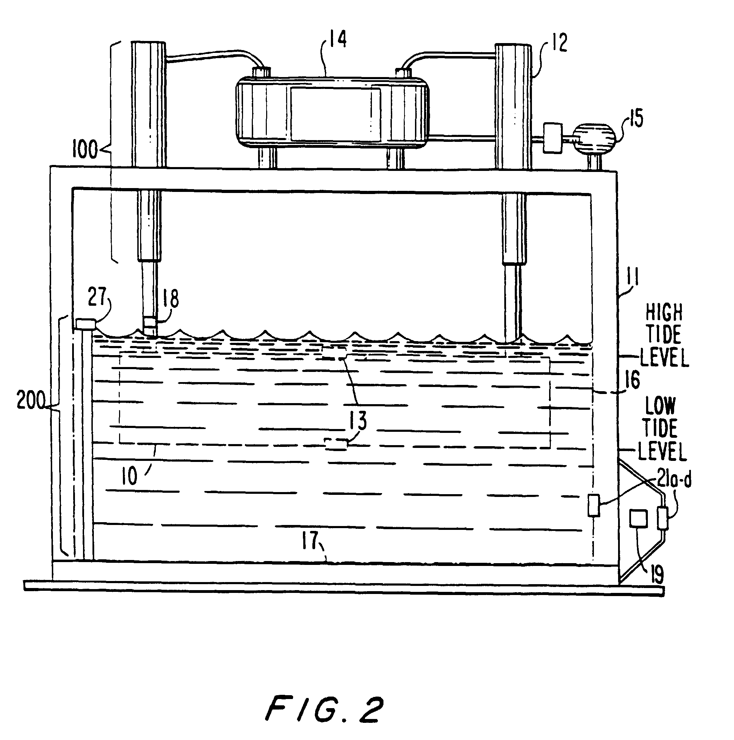

The embodiment of the present invention shown in Figure 1 may be modified to include additional or fewer energy producing systems depending on economic, environmental or other considerations. For example, Figure 2 shows an embodiment of the present invention comprising the moveable tank system 100 and enclosure system 200. This embodiment may be preferable where it is impractical to deploy a bellows system 300 or to support the bottom of the enclosure system above the floor of the body of water.

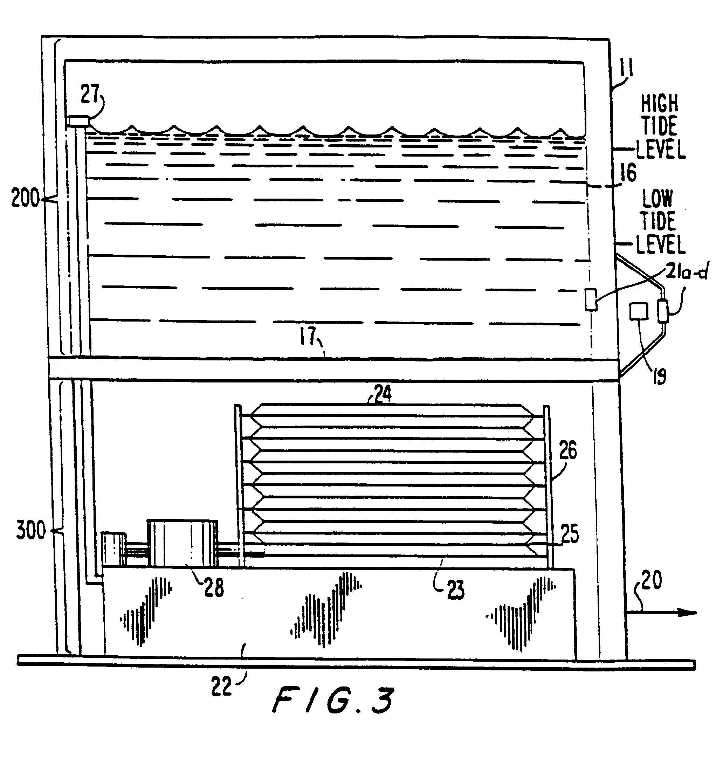

Figure 3 shows another embodiment of the present invention comprising the enclosure system 200 and the bellows system 300. This embodiment may be preferable in environments where it is desireable to limit the height of the tidal generator. An enclosure system situated directly atop the bellows system (where the submerged stationary tank is deployed either with or without the bellows tank) appears to be the most efficient and cost-effective configuration of the present invention. The efficiency of this configuration can be further enhanced by using electrical energy generated by the enclosure system to power the consumptive phase in which water is pumped out of the submerged stationary tank.

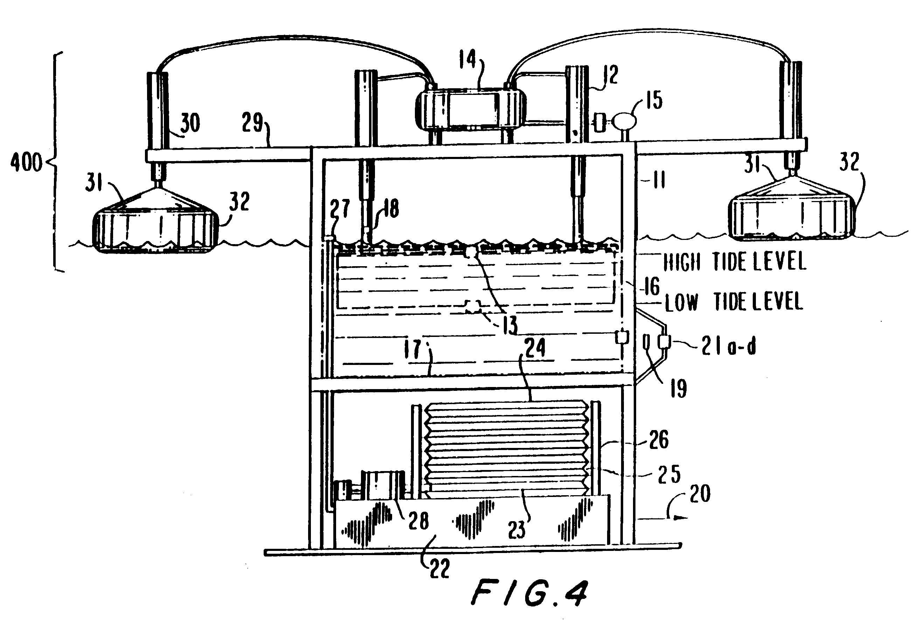

Figure 4 shows a buoyant mass-actuated piston energy producing system 400 that may be used in conjunction with any of the embodiments of the present invention shown in Figures 1-4. The buoyant mass-actuated piston system includes a support arm 29 that may be affixed to and horizontally extend from the rigid support structure 11 of the moveable tank system 100 or the top of the vertical walls 16 of the enclosure system 200. The support arm 29 is connected to a hydraulic cylinder 30 similar to that used with the moveable tank system 100. A sling 31 capable of cradling a buoyant object 32 such as a docked ship is attached to the hydraulic cylinder 30.

In operation, the cradled buoyant object 32 is locked into position at high tide and is lowered as the tide approaches its lowest level. The downward force exerted by the object 32 causes the hydraulic fluid in the cylinder 30 to be subject to high-pressure conditions. As the object 32 settles into the low tide level water, the hydraulic cylinder 30 delivers high-pressure hydraulic fluid to accumulators for temporary storage until turbines are used to generate power from the stored hydraulic fluids. The force generated by the upward movement of the buoyant object during rising tides may also be used to pressurize the hydraulic fluid within the cylinder 30 for ultimate conversion to electric power.

The skilled worker will recognize that the buoyant mass-actuated piston system 400 may share accumulators and generators with the moveable tank system, or the buoyant mass-actuated system may be equipped with its own accumulators and generators. Preferably, embodiments of the present invention that incorporate the buoyant mass-actuated piston system 400 will employ multiple units of the system in order to maximize energy production.

The apparatus of the present invention is advantageous in that it can be readily employed for "pumped storage" of electrical energy. The disclosed apparatus may be adapted to generate electrical energy at times that coincide with peak demand hours for energy consumption. Most currently known pumped storage units consume more energy than they produce. However, the present invention can operate as an energy-positive pumped storage unit because of the constant availability of energy from tidal movements.

The disclosed tidal generator can also be used to produce industrial-use gasses such as hydrogen gas and oxygen gas. During times when surplus electrical energy is generated by the apparatus, that energy can be used to react with water. Such a reaction results in the production of oxygen and hydrogen gasses. The tidal power station of the present invention can be equipped with well known processing facilities to separate and store the resulting hydrogen and oxygen gasses. Moreover, pipelines running between the tidal power station and the shoreline can be constructed to accommodate delivery of the gasses for use in various industrial applications.

The skilled worker will appreciate that the present invention can be practiced by other than the described embodiments, which are presented for purposes of illustration and not of limitation, and the present invention is limited only by the claims that follow.

## Claims

1. An apparatus for generating electrical energy from the tidal movements of a body of water having a tidal regimen and a floor comprising:
an enclosure (200) securely fixed to the floor of the body of water, the enclosure being formed by substantially vertical walls (16) and a substantially horizontal bottom (17) wherein the walls extend above the extreme high tide level and below the extreme low tide level of the body of water, and the walls are adapted with means for selectively directing water to flow into and out of the enclosure through turbines (19) operatively associated with the walls and wherein power can be generated at around the time of low tide by releasing water through the turbines (19) from the inside of enclosure (100) to the body of water and around the time of high tide by releasing water through the turbines (19) into the inside of the enclosure (100) from the body of water.

2. An apparatus according to claim 1 further comprising at least one stationary tank (22) that is positioned entirely below the extreme low tide level of the body of water, wherein the stationary tank is adapted with means to selectively allow water to travel between the stationary tank and the surrounding body of water so that the stationary tank is substantially filled with water at high tide and substantially filled with air at low tide;
a turbine means (28) operatively associated with the stationary tank that generates power as water moves from the surrounding body of water into the stationary tank; and
a means (27) for supplying air to the stationary tank so that the pressure of the air maintained within the stationary tank is substantially equal to atmospheric air pressure;
wherein water is directed out of the stationary tank at substantially the time of low tide when the body of water exerts comparatively less pressure on the stationary tank, and wherein water is directed into the stationary tank at substantially the time of high tide when the body of water exerts comparatively greater pressure on the stationary tank, so as to accomplish a net gain of power from the selective travel of the water into and out of the stationary tank.

3. An apparatus according to claims 1 or 2 comprising a plurality of means for selectively directing water to flow into and out of the enclosure through turbines operatively associated with the walls, each of said means being positioned between the extreme high tide level and extreme low tide level of the body of water.

4. An apparatus according to claims 1 or 2 wherein the apparatus is operable to selectively direct the flow of water into or out of the enclosure at intervals of the tidal regimen at which the difference in the height of the water inside the enclosure and the height of the water outside the enclosure substantially approximates the greatest difference between the water levels at high tide and low tide.

5. An apparatus according to claim 1, 2, 3 or 4 that is deployed in an off-shore location.

6. An apparatus according to any one of claims 1 to 5 further comprising:
moveable tank (10) adapted with means (13) for selectively allowing water and air to flow in and out of the tank;
a support means including a rigid frame (11) and a hydraulic cylinder (12) operatively associated with the moveable tank to allow for vertical movement of the tank wherein the hydraulic cylinder is in fluid communication with hydraulic fluid that is pressurized in response to the upward and downward vertical movements of the tank;
a means for storing pressurized hydraulic fluid (14);
a locking means (18) operatively associated with the support means for selectively retaining the tank at specific positions in the vertical plane relative to the tide level of the body of water; and
a turbine (15) associated with the means for storing pressurized hydraulic fluid that generates power as the pressurized hydraulic fluid is released into the turbine.

7. An apparatus according to claim 6 wherein no part of the movable tank extends horizontally beyond the walls of the enclosure.

8. An apparatus according to claim 6 further comprising:
at least one stationary tank (22) that is positioned completely below the extreme low tide level of the body of water;
at least one bellows tank (23) including expandable and compressible side walls (25) and a lid (24) positioned atop the stationary tank wherein the lid of the bellows tank does not extend above the extreme low tide level of the body of water;
a means to selectively allow water to travel between the bellows tank and the stationary tank so that the bellows tank is substantially expanded and filled with water at low tide and substantially compressed and empty at high tide and the stationary tank is substantially filled with water at high tide and substantially filled with air at low tide;
a turbine (28) positioned between the bellows tank and the stationary tank that generates power as water is moved from the bellows tank to the stationary tank; and
a means (27) for supplying air to the stationary tank so that the pressure of the air maintained within the stationary tank is substantially equal to atmospheric air pressure.

9. An apparatus according to claim 8 wherein no part of the stationary tank or the bellows tank extend horizontally beyond the walls of the enclosure.

10. An apparatus according to any one of claims 1 to 9 further comprising:
at least one stationary tank (22) that is positioned completely below the extreme low tide level of the body of water;
at least one bellows tank (23) including expandable and compressible side walls (25) and a lid (24) positioned atop the stationary tank wherein the lid of the bellows tank does not extend above the extreme low tide level of the body of water;
a means for selectively allowing water to travel between the bellows tank and the stationary tank so that the bellows tank is substantially expanded and filled with water at low tide and substantially compressed and empty at high tide and the stationary tank is substantially filled with water at high tide and substantially filled with air at low tide;
a turbine (28) positioned between the bellows tank and the stationary tank that generates power as water is moved from the bellows tank to the stationary tank; and
a means (27) for supplying air to the stationary tank so that the pressure of the air maintained within the stationary tank is substantially equal to atmospheric air pressure.

11. An apparatus according to claim 10 wherein no part of the stationary tank or bellows tank extend horizontally beyond the walls of the enclosure.

12. An apparatus according to claim 8, 9, 10 or 11 wherein the surface area of the enclosure is greater than 4,000 m².

13. An apparatus according to any one of claims 9 to 12 wherein the total horizontal surface area of the one or more moveable tanks is greater than 3,000 m².

14. An apparatus according to any one of claims 8 to 13 wherein the volume of the stationary tank and the bellows tank are substantially equal.

15. An apparatus according to any one of claims 8 to 14 wherein the total horizontal surface area of the one or more stationary tanks and the total horizontal surface area of the one or more rigid lids of the bellows tanks both are greater than 3,000 m².

16. An apparatus according to any one of claims 8 to 15 wherein the height of the moveable tank is substantially equal to the maximum tidal range.

17. An apparatus according to any one of claims 1 to 16 wherein the substantially horizontal bottom of the enclosure (200) is the floor of the body of water.

18. An apparatus according to any one of claims 1 to 17 further comprising:
one or more means (29) to selectively support a buoyant mass (32) above the level of the body of water including a horizontally extending support arm and a sling that supportably fits around the buoyant mass;
a means for controllably lowering the suspended buoyant mass into the water including a hydraulic cylinder (30) that is in fluid communication with hydraulic fluid that is pressurized in response downward force exerted by the buoyant mass as it is suspended above and lowered into the water;
a means (14) for storing the hydraulic fluid that is pressurized in response to the movements of the buoyant mass; and
a turbine (15) associated with the means for storing the hydraulic fluid that is pressurized in response to the movements of the buoyant mass that generates power as the high pressure hydraulic fluid is released into the turbine.

19. An apparatus according to claim 17 or 18 wherein the buoyant mass is a docked ship.

20. A method of producing industrial gasses selected from the group consisting of hydrogen gas and oxygen gas comprising the steps of generating electrical energy using the apparatus of any one of claims 1 to 19, reacting that electrical energy with water and separating the resulting hydrogen and oxygen gasses.

21. A method according to claim 20 including the further step of storing the resulting hydrogen and oxygen gasses.

22. A method according to claim 20 or 21 including the further step of delivering the resulting hydrogen and oxygen gases to shore via pipeline.

## Patentansprüche

1. Vorrichtung zur Erzeugung elektrischer Energie aus den Gezeitenbewegungen einer den Gezeiten unterworfenen Wassermasse mit einem Grund, gekennzeichnet durch:
ein fest im Grund der Wassermasse verankertes Gehäuse (200) aus im wesentlichen senkrechten Wänden (16) und einem im wesentlichen horizontalen Boden (17), wobei die Wände über den höchsten Hochwasserpegel und unter den tiefsten Niedrigwasserpegel hinausragen und mit Einrichtungen versehen sind, die durch betriebsmässig in den Wänden angeordnete Turbinen hindurch Wasser selektiv in das Gehäuse hinein und aus dem Gehäuse heraus leiten, und wobei Energie dadurch erzeugt wird, dass etwa bei Niedrigwasserstand Wasser durch die Turbinen (19) aus dem Innenraum des Gehäuses (200) in die Wassermasse und etwa bei Hochwasserstand Wasser durch die Turbinen (19) aus der Wassermasse in den Innenraum des Gehäuses (200) geleitet wird.

2. Vorrichtung nach Anspruch 1, ferner mit:
mindestens einem völlig unter den tiefsten Niedrigwasserpegel der Wassermasse eingetauchten stationären Tank (22), der mit Einrichtungen versehen ist, über die Wasser selektiv zwischen dem stationären Tank und der umgebenden Wassermasse strömen kann, so dass der stationäre Tank bei Hochwasserstand im wesentlichen mit Wasser und bei Niedrigwasserstand im wesentlichen mit Luft gefüllt ist;
einer dem stationären Tank betriebsmässig zugeordneten Turbine (28) zur Erzeugung von Energie, wenn Wasser aus der umgebenden Wassermasse in den stationären Tank strömt;
und einer Einrichtung (27) für die Zufuhr von Luft zum stationären Tank, so dass der Druck der im stationären Tank befindlichen Luft im wesentlichen gleich dem atmosphärischen Luftdruck gehalten wird;
wobei im wesentlichen bei Niedrigwasserstand, wenn die Wassermasse einen verhältnismässig geringen Druck auf den stationären Tank ausübt, Wasser aus dem stationären Tank heraus und im wesentlichen bei Hochwasserstand, wenn der stationäre Tank durch die Wassermasse einem verhältnismässig höheren Druck ausgesetzt ist, Wasser in den stationären Tank hinein geleitet wird, so dass aus dem selektiven Wasserfluss in den und aus dem stationären Tank ein Nettoenergiegewinn erzielt wird.

3. Vorrichtung nach Anspruch 1 oder 2 mit mehreren Einrichtungen, über die betriebsmässig in den Wänden angeordnete Turbinen passierend Wasser selektiv in das Gehäuse hinein und aus dem Gehäuse heraus geleitet wird, wobei jede dieser Einrichtungen zwischen dem höchsten Hochwasserpegel und dem tiefsten Niedrigwasserpegel der Wassermasse angeordnet ist.

4. Vorrichtung nach Anspruch 1 oder 2, wobei zu den Gezeitenintervallen, an denen die Wasserstandsdifferenz zwischen dem Wasser innerhalb und ausserhalb des Gehäuses im wesentlichen der grössten Differenz zwischen den Hoch- und Niedrigwasserpegeln angenähert ist, ein Wasserstrom selektiv in das Gehäuse hinein bzw. aus dem Gehäuse heraus geleitet wird.

5. Vorrichtung nach Anspruch 1, 2, 3 oder 4, wobei die Vorrichtung an küstenfernen Standorten eingesetzt ist.

6. Vorrichtung nach irgend einem der Ansprüche 1 bis 5, ferner mit:
einem beweglichen Tank (10) mit Einrichtungen (13), über die Wasser und Luft selektiv in den bzw. aus dem Tank geleitet werden;
einer Tragkonstruktion mit einem starren Rahmen (11) und einem dem beweglichen Tank betriebsmässig zugeordneten Hydraulikzylinder (12) zur vertikalen Bewegung des Tanks, wobei der Hydraulikzylinder in Fluidverbindung mit einem Hydraulikfluid steht, das entsprechend den vertikalen Aufwärts- und Abwärtsbewegungn des Tanks mit Druck beaufschlagt wird;
einer Einrichtung zum Speichern von druckbeaufschlagtem Hydraulikfluid (14);
einer der Tragkonstruktion betriebsmässig zugeordneten Verriegelungseinrichtung (18), die den Tank in vorgegebenen Positionen in der Senkrechtebene relativ zur Tidenhöhe der Wassermasse selektiv fixiert; und
einer der Einrichtung zum Speichern von druckbeaufschlagtem Hydraulikfluid betriebsmässig zugeordneten Turbine (15) zur Erzeugung von Energie, wenn das durckbeaufschlagte Hydraulikfluid in die Turbine eingeleitet wird.

7. Vorrichtung nach Anspruch 6, wobei kein Bauteil des beweglichen Tanks horizontal über die Wände des Gehäuses hinausragt.

8. Vorrichtung nach Anspruch 6, ferner mit:
mindestens einem stationären Tank (22), der vollständig unter dem tiefsten Niedrigwasserpegel der Wassermasse liegend angeordnet ist;
mindestens einem Balgentank (23) mit expandierbaren und komprimierbaren Seitenwänden (25) und einem auf der Oberseite des stationären Tanks befindlichen Deckel (24), der nicht über den tiefsten Niedrigwasserpegel der Wassermasse vorsteht;
einer Einrichtung, die den selektiven Wasserfluss zwischen dem Balgentank und dem stationärem Tank ermöglicht, so dass der Balgentank bei Niedrigwasserstand im wesentlichen expandiert und mit Wasser gefüllt und bei Hochwasserstand im wesentlichen komprimiert und leer sowie der stationäre Tank bei Hochwasserstand im wesentlichen mit Wasser und bei Niedrigwasserstand im wesentlichen mit Luft gefüllt ist;
einer zwischen Balgentank und stationärem Tank angeordnete Turbine (28), die beim Einleiten von Wasser aus dem Balgentank in den stationären Tank Energie erzeugt; und
einer Einrichtung (27) für die Zufuhr von Luft zum stationären Tank, so dass der Druck der im stationären Tank befindlichen Luft im wesentlichen gleich dem atmosphärischen Luftdruck gehalten wird.

9. Vorrichtung nach Anspruch 8, wobei kein Bauteil des stationären Tanks oder des Balgentanks horizontal über die Wände des Gehäuses vorsteht.

10. Vorrichtung nach irgend einem der Ansprüche 1 bis 9, ferner mit:
mindestens einem stationären Tank (22), der vollständig unter dem tiefsten Niedrigwasserpegel der Wassermasse liegend angeordnet ist;
mindestens einem Balgentank (23) mit expandierbaren und komprimierbaren Seitenwänden (25) und einem auf der Oberseite des stationären Tanks befindlichen Deckel (24), der nicht über den tiefsten Niedrigwasserpegel der Wassermasse vorsteht;
einer Einrichtung, die den selektiven Wasserfluss zwischen dem Balgentank und dem stationärem Tank ermöglicht, so dass der Balgentank bei Niedrigwasserstand im wesentlichen expandiert und mit Wasser gefüllt und bei Hochwasserstand im wesentlichen komprimiert und leer sowie der stationäre Tank bei Hochwasserstand im wesentlichen mit Wasser und bei Niedrigwasserstand im wesentlichen mit Luft gefüllt ist;
einer zwischen dem Balgentank und dem stationärem Tank angeordneten Turbine (28), die beim Einleiten von Wasser aus dem Balgentank in den stationären Tank Energie erzeugt; und
einer Einrichtung (27) für die Zufuhr von Luft zum stationären Tank, so dass der Druck der im stationären Tank befindlichen Luft im wesentlichen gleich dem atmosphärischen Luftdruck gehalten wird.

11. Vorrichtung nach Anspruch 10, wobei kein Bauteil des stationären Tanks oder des Balgentanks horizontal über die Wände des Gehäuses vorsteht.

12. Vorrichtung nach Anspruch 8, 9, 10 oder 11, wobei der Flächeninhalt des Gehäuses grösser als 4000 m² ist.

13. Vorrichtung nach irgend einem der Ansprüche 9 bis 12, wobei die gesamte horizontale Oberfläche des einzelnen beweglichen Tanks oder mehrerer beweglicher Tanks grösser ist als 3000 m².

14. Vorrichtung nach irgend einem der Ansprüche 8 bis 13, wobei die Volumen des stationären Tanks und des Balgentanks im wesentlichen gleich sind.

15. Vorrichtung nach irgend einem der Ansprüche 8 bis 14, wobei die gesamte horizontale Oberfläche des einzelnen stationären Tanks oder mehrerer stationärer Tanks sowie die gesamte horizontale Oberfläche des einzelnen starren Deckels oder mehrerer starrer Deckel der Balgentanks grösser sind als 3000 m².

16. Vorrichtung nach irgend einem der Ansprüche 8 bis 15, wo bei die Höhe des beweglichen Tanks im wesentlichen gleich dem maximalen Tidenhub ist.

17. Vorrichtung nach irgend einem der Ansprüche 1 bis 16, wobei der im wesentlichen horizontale Boden des Gehäuses (200) vom Grund der Wassermasse gebildet wird.

18. Vorrichtung nach irgend einem der Ansprüche 1 bis 17, ferner mit:
einer oder mehreren Einrichtungen (29) zur selektiven Halterung eines Schwimmkörpers (32) über der Oberfläche der Wassermasse mit einem horizontal verlaufenden Tragarm und einem Anschlaggeschirr, das um den Schwimmkörper herumgelegt wird und diesen hält;
einer Einrichtung zur kontrollierten Absenkung des aufgehängten Schwimmkörpers ins Wasser mit einem Hydraulikzylinder (30), der in Fluidverbindung mit einem Hydraulikfluid steht, das entsprechend der durch den aufgehängten und ins Wasser gelassenen Schwimmkörper erzeugten nach unten gerichteten Kraft unter Druck gesetzt wird;
einer Einrichtung (14) zur Speicherung des entsprechend den Bewegungen des Schwimmkörpers unter Druck gesetzten Hydraulikfluids; und
einer mit der Einrichtung zur Speicherung des entsprechend den Bewegungen des Schwimmkörpers unter Druck gesetzten Hydraulikfluids zusammenwirkenden Turbine (15), die bei Einleiten des unter hohem Druck stehenden Hydraulikfluids Energie erzeugt.

19. Vorrichtung nach Anspruch 17 oder 18, wobei der Schwimmkörper ein angedocktes Schiff ist.

20. Verfahren zur Herstellung von Industriegasen ausgewählt aus der Wasser- und Sauerstoffgase enthaltenden Gruppe mit den Schritten: Erzeugung elektrischer Energie mittels der Vorrichtung nach irgend einem der Ansprüche 1 bis 19, Umsetzen dieser elektrischen Energie mit Wasser und Trennen der erhaltenen Wasserstoff- und Sauerstoffgase.

21. Verfahren nach Anspruch 20, wobei die anfallenden Wasserstoff- und Sauerstoffgase gespeichert werden.

22. Verfahren nach Anspruch 20 oder 21, wobei die anfallenden Wasserstoff- und Sauerstoffgase über Rohrleitungen zur Küste befördert werden.

## Revendications

1. Appareil permettant de produire de l'énergie électrique à partir des mouvements de marée d'une masse d'eau possédant un régime de marées et un fond. l'appareil comprenant :
une enceinte (200) fixée à demeure au fond de la masse d'eau, l'enceinte étant formée par des parois (16) sensiblement verticales et une partie inférieure (17) sensiblement horizontale, où les parois se prolongent au-dessus du niveau extrême de la marée haute et au-dessous du niveau extrême de la marée basse de la masse d'eau, et ces parois sont dotées de moyens permettant de diriger sélectivement l'eau de façon que celle-ci entre dans l'enceinte et en sorte en passant par des turbines (19) qui sont fonctionnellement associées avec les parois, et où de l'énergie peut être produite approximativement au moment de la marée basse par libération d'eau dans les turbines (19) en provenance de l'intérieur de l'enceinte (200) et à destination de la masse d'eau, et approximativement au moment de la marée haute par libération d'eau dans les turbines (19) à destination de l'intérieur de l'enceinte (200) et en provenance de la masse d'eau.

2. Appareil selon la revendication 1, comprenant en outre au moins une cuve fixe (22) qui est placée entièrement en dessous du niveau extrême de marée basse de la masse d'eau, où la cuve fixe est dotée de moyens destinés à laisser sélectivement l'eau se déplacer entre la cuve fixe et la masse d'eau environnante de façon que la cuve fixe se remplisse sensiblement d'eau à marée haute et se remplisse sensiblement d'air à marée basse ;
un moyen à turbine (28) fonctionnellement associé avec la cuve fixe, lequel moyen produit de l'énergie lorsque l'eau se déplace depuis la masse d'eau environnante pour rentrer dans la cuve fixe ; et
un moyen (27) servant à fournir de l'air à la cuve fixe de façon que la pression de l'air maintenue à l'intérieur de la cuve fixe soit sensiblement égale à la pression de l'air atmosphérique ;
où l'eau est dirigée hors de la cuve fixe sensiblement au moment de la marée basse, lorsque la masse d'eau exerce une pression relativement moindre sur la cuve fixe, et où l'eau est dirigée de façon à entrer dans la cuve fixe sensiblement au moment de la marée haute, lorsque la masse d'eau exerce une pression relativement plus grande sur la cuve fixe, de sorte que l'on obtient un gain d'énergie net à partir du déplacement sélectif de l'eau qui entre dans la cuve fixe et en sort.

3. Appareil selon la revendication 1 ou 2, comprenant une pluralité de moyens destinés à diriger sélectivement l'eau de façon qu'elle entre dans l'enceinte et en sorte en passant par des turbines fonctionnellement associées avec les parois, chacun desdits moyens étant placé entre le niveau extrême de la marée haute et le niveau extrême de la marée basse de la masse d'eau.

4. Appareil selon la revendication 1 ou 2, où l'appareil peut être actionné pour sélectivement diriger le flux d'eau afin qu'il entre dans l'enceinte et en sorte à des intervalles du régime de marées pour lesquels la différence entre la hauteur de l'eau à l'intérieur de l'enceinte et la hauteur de l'eau à l'extérieur de l'enceinte approche sensiblement la plus grande différence entre les niveaux de l'eau à marée haute et à marée basse.

5. Appareil selon la revendication 1, 2, 3 ou 4, qui est placé en un emplacement situé à distance des côtes.

6. Appareil selon l'une quelconque des revendications 1 à 5, comprenant en outre :
une cuve mobile (10) dotée de moyens (13) destinés à laisser sélectivement l'eau et l'air entrer dans la cuve et en sortir ;
un moyen de support comportant un bâti rigide (11) et un cylindre hydraulique (12) fonctionnellement associé avec la cuve mobile de façon à permettre un déplacement vertical de la cuve, où le cylindre hydraulique est en communication de fluide avec un fluide hydraulique qui est mis sous pression sous l'action des déplacements verticaux, vers le haut et vers le bas, de la cuve ;
un moyen servant à stocker le fluide hydraulique sous pression (14) ;
un moyen de verrouillage (18) fonctionnellement associé avec le moyen de support et servant à maintenir sélectivement la cuve en des positions spécifiques dans le plan vertical par rapport au niveau des marées de la masse d'eau ; et
une turbine (15) associée au moyen servant à stocker le fluide hydraulique sous pression, la turbine produisant de l'énergie lorsque le fluide hydraulique sous pression est libéré dans la turbine.

7. Appareil selon la revendication 6, où aucune partie de la cuve mobile ne s'étend horizontalement au-delà des parois de l'enceinte.

8. Appareil selon la revendication 6, comprenant en outre :
au moins une cuve fixe (22) qui est placée entièrement en dessous du niveau extrême de marée basse de la masse d'eau ;
au moins une cuve à soufflet (23) comportant des parois latérales (25) qui peuvent être dilatées et comprimées et un couvercle (24) placé sur le dessus de la cuve fixe, où le couvercle de la cuve à soufflet ne s'étend pas au-dessus du niveau extrême de marée basse de la masse d'eau ;
un moyen destiné à sélectivement laisser l'eau se déplacer entre la cuve à soufflet et la cuve fixe de façon que la cuve à soufflet se dilate et se remplisse d'eau sensiblement à marée basse et se comprime et se vide sensiblement à marée haute et que la cuve fixe se remplisse sensiblement d'eau à marée haute et se remplisse sensiblement d'air à marée basse ;
une turbine (28) placée entre la cuve à soufflet et la cuve fixe, laquelle turbine produit de l'énergie lorsque de l'eau se déplace de la cuve à soufflet à la cuve fixe ; et
un moyen (27) servant à fournir de l'air à la cuve fixe de façon que la pression de l'air maintenue à l'intérieur de la cuve fixe soit sensiblement égale à la pression de l'air atmosphérique.

9. Appareil selon la revendication 8, où aucune partie de la cuve fixe ou de la cuve à soufflet ne s'étend horizontalement au-delà des parois de l'enceinte.

10. Appareil selon l'une quelconque des revendications 1 à 9, comprenant en outre :
au moins une cuve fixe (22) qui est placée entièrement en dessous du niveau extrême de marée basse de la masse d'eau ;
au moins une cuve à soufflet (23) comportant des parois latérales (25) pouvant être dilatées et comprimées et un couvercle (24) placé sur le dessus de la cuve fixe, où le couvercle de la cuve à soufflet ne s'étend pas au-dessus du niveau extrême de marée basse de la masse d'eau ;
un moyen servant à sélectivement laisser l'eau se déplacer entre la cuve à soufflet et la cuve fixe de façon que la cuve à soufflet se dilate et se remplisse d'eau sensiblement à marée basse et se comprime et se vide sensiblement à marée haute et que la cuve fixe se remplisse sensiblement d'eau à marée haute et se remplisse sensiblement d'air à marée basse ;
une turbine (28) placée entre la cuve à soufflet et la cuve fixe, laquelle turbine produit de l'énergie lorsque de l'eau se déplace de la cuve à soufflet à la cuve fixe ; et
un moyen (27) servant à fournir de l'air à la cuve fixe de façon que la pression de l'air maintenue à l'intérieur de la cuve fixe soit sensiblement égale à la pression de l'air atmosphérique.

11. Appareil selon la revendication 10, où aucune partie de la cuve fixe ou de la cuve à soufflet ne s'étend horizontalement au-delà des parois de l'enceinte.

12. Appareil selon la revendication 8, 9, 10 ou 11, où l'aire superficielle de l'enceinte est supérieure à 4 000 m².

13. Appareil selon l'une quelconque des revendications 9 à 12, où l'aire superficielle horizontale totale de la cuve mobile ou d'un plus grand nombre de cuves mobiles est supérieure à 3 000 m².

14. Appareil selon l'une quelconque des revendications 8 à 13, où le volume de la cuve fixe et celui de la cuve à soufflet sont sensiblement égaux.

15. Appareil selon l'une quelconque des revendications 8 à 14, où l'aire superficielle horizontale totale de la cuve fixe ou d'un plus grand nombre de cuves fixes et l'aire superficielle horizontale totale du couvercle rigide ou d'un plus grand nombre de couvercles rigides des cuves à soufflet sont toutes deux supérieures à 3 000 m².

16. Appareil selon l'une quelconque des revendications 8 à 15, où la hauteur de la cuve mobile est sensiblement égale à l'intervalle maximal des marées.

17. Appareil selon l'une quelconque des revendications 1 à 16, où la partie inférieure sensiblement horizontale de l'enceinte (200) est le fond de la masse d'eau.

18. Appareil selon l'une quelconque des revendications 1 à 17, comprenant en outre :
un ou plusieurs moyens (29) destinés à soutenir sélectivement une masse flottante (32) au-dessus du niveau de la masse d'eau, ce ou ces moyens comportant un bras de support qui s'étend horizontalement et une suspente qui s'ajuste, de manière à la soutenir, autour de la masse flottante ;
un moyen servant à abaisser dans l'eau de façon commandée la masse flottante suspendue. ce moyen comportant un cylindre hydraulique (30) qui est en communication de fluide avec un fluide hydraulique qui est soumis à une pression sous l'action de la force descendante exercée par la masse flottante lorsqu'elle est suspendue au-dessus de l'eau et s'abaisse dans l'eau ;
un moyen (14) servant à stocker le fluide hydraulique qui a été soumis à une pression sous l'action des mouvements de la masse flottante : et
une turbine (15) associée au moyen servant à stocker le fluide hydraulique qui a été mis sous pression sous l'action des mouvements de la masse flottante, cette turbine produisant de l'énergie lorsque le fluide hydraulique sous pression élevée est libéré dans la turbine.

19. Appareil selon la revendication 17 à 18, où la masse flottante est un navire accosté.

20. Procédé de production de gaz industriels choisis dans le groupe comprenant le gaz hydrogène et le gaz oxygène, le procédé comprenant les opérations qui consistent à produire de l'énergie électrique en utilisant l'appareil de l'une quelconque des revendications 1 à 19, à faire réagir cette énergie électrique avec l'eau et à séparer les gaz hydrogène et oxygène ainsi obtenus.

21. Procédé selon la revendication 20, comportant l'opération supplémentaire qui consiste à stocker les gaz hydrogène et oxygène obtenus.

22. Procédé selon la revendication 20 ou 21, comportant l'opération supplémentaire qui consiste à délivrer les gaz hydrogène et oxygène obtenus à des installations terrestres via une canalisation.
